# EUROPÄISCHE PATENTANMELDUNG

(11) **EP 3 594 765 A1**
(43) Veröffentlichungstag der Anmeldung: **15.01.2020**
(21) Anmeldenummer: 19182584.3
(22) Anmeldetag: 26.06.2019
(51) Int. Cl.: G05B 19/418, G06Q 10/08

(54) **AUTOMATISIERUNGSSYSTEM FÜR EIN WARENLAGER**

(30) Priorität: 11.07.2018 DE 102018116834
(71) Anmelder: Sick AG, 79183 Waldkirch (DE)
(72) Erfinder: Beinschob, Dr. Patric, 22043 Hamburg (DE); Böhning, Markus, 22307 Hamburg (DE)

(57) **Zusammenfassung**

Um eine genaue und automatisierte Erkennung von Warenbestand eines Warenlagers zu erzielen, ist ein Automatisierungssystem (1) für ein Warenlager mit zumindest einem Warenregal (2) vorgesehen, das Automatisierungssystem (1) umfasst eine mobile Plattform (3), die sich durch das Warenlager bewegt, Informationstafeln (4), die Information bzgl. einer Ware (W1..Wi) des Warenlagers wiedergeben und an dem Warenregal (2) angebracht sind, wobei die mobile Plattform (3) mindestens eine Tiefenkamera (3a), die eine Warenlücke (L1..Li) im Warenregal (2) detektiert, und mindestens einen Sensor (3b), der die Information der entsprechenden an der Warenlücke (L1..Li) positionierten Informationstafel (4) erfasst, umfasst, und wobei ein übergeordnetes Steuerungssystem vorgesehen ist, das Daten der Tiefenkamera (3a) und des Sensors (3b) auswertet und eine Auffüllung der Warenlücke (L1..Li) veranlasst.

## Beschreibung

Die Erfindung betrifft ein Automatisierungssystem für ein Warenlager mit zumindest einem Warenregal, wobei das Warenregal insbesondere für ein Logistiklager oder für Läden vorgesehen ist.

In Logistiklagern oder Läden sind Warenregale aufgestellt, in denen Waren zwischengelagert sind oder Kunden präsentiert werden, so dass die Waren aus den Warenregalen entnommen werden können. Hierbei stellt sich eine Herausforderung aus Sicht einer Lager- oder Ladenverwaltung, dass alle Waren in den Warenregalen stets verfügbar sind und schnell auf einen Leerstand in den Warenregalen leicht reagiert werden kann.

Bei der heutigen Lager- oder Ladenverwaltung werden Menschen eingesetzt, um die Warenregale mit Waren zu befüllen. Hierzu müssen Regalgänge abgelaufen werden. Die Menschen bestimmen Lücken im Warenregal und entsprechend fehlenden Warenbestand, indem sie Barcodes für die fehlende Ware vom Preisschild oder ähnlichem am Warenregal einscannen und entsprechende Nachbestellungen und/oder Nachbestückungen aufgeben.

In Großlagern von beispielsweise Logistikfirmen oder Online-Versandhändlern werden Tags an Waren vorgesehen, die am Ausgang des Logistiklagers automatisch erfasst werden und eine Nachbestellung auslösen. Eine andere Möglichkeit besteht darin, eine komplette Kameraüberwachung vorzusehen, die die Warenregale überwachen. Die Tags sind unwirtschaftlich, da hohe Unkosten durch die Anzahl der Komponenten verursacht werden, insbesondere wenn die Waren aus kleinen Artikeln bestehen. Die Kameraüberwachung ist ungenau und die Auswertung der Bilder der Kameraüberwachung ist aufwändig.

Es ist daher eine Aufgabe der Erfindung, ein Automatisierungssystem für ein Warenlager mit zumindest einem Warenregal derart zu verbessern, so dass eine genaue und automatisierte Erkennung von Warenbestand des Warenregals erzielbar ist.

Die Aufgabe wird erfindungsgemäß durch ein Automatisierungssystem mit den Merkmalen des Anspruchs 1 gelöst.

Hierbei umfasst das Automatisierungssystem eine mobile Plattform, die sich durch das Warenlager bewegt, Informationstafeln, die Information bzgl. einer Ware des Warenlagers wiedergeben und an dem Warenregal angebracht sind, wobei die mobile Plattform mindestens eine Tiefenkamera, die eine Warenlücke im Warenregal detektiert, und mindestens einen Sensor, der die Information der entsprechenden an der Warenlücke positionierten Informationstafel erfasst, aufweist, und wobei ein übergeordnetes Steuerungssystem vorgesehen ist, das Daten der Tiefenkamera und des Sensors auswertet und eine Auffüllung der Warenlücke veranlasst.

Dies hat den Vorteil, dass das hochautomatisierte Warenregal ohne kostenintensive Infrastruktur auskommt.

Gemäß einem bevorzugten Ausführungsbeispiel umfasst die mobile Plattform einen Reinigungsroboter, einen Palettierungsroboter und/oder einen Logistikroboter. Vorteilhafterweise ist die mobile Plattform manuell bewegbar oder autonom beweglich. Insbesondere umfasst die Informationstafel ein elektronisches Preisschild, das Art und Preis der Ware wiedergibt.

Weiterhin umfasst gemäß einem weiteren bevorzugten Ausführungsbeispiel die Tiefenkamera eine 3D-Kamera oder einen 3D-Scanner. Hierdurch kann eine Anzahl von Überwachungskameras im Logistiklager reduziert und damit die Kosten für das Logistiklager gesenkt werden.

Gemäß einem weiteren bevorzugten Ausführungsbeispiel umfasst der Sensor ein RFID-Lesegerät, ein Barcode-Lesegerät oder ein Bluetooth-Lesegerät. Hieraus ergibt sich der Vorteil, dass keine teure hochauflösende Kamera benötigt wird, um die Information der Informationstafeln zu erhalten.

Das erfindungsgemäße Automatisierungssystem kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand eines Ausführungsbeispiels erläutert. Die Figur der Zeichnung zeigt in:

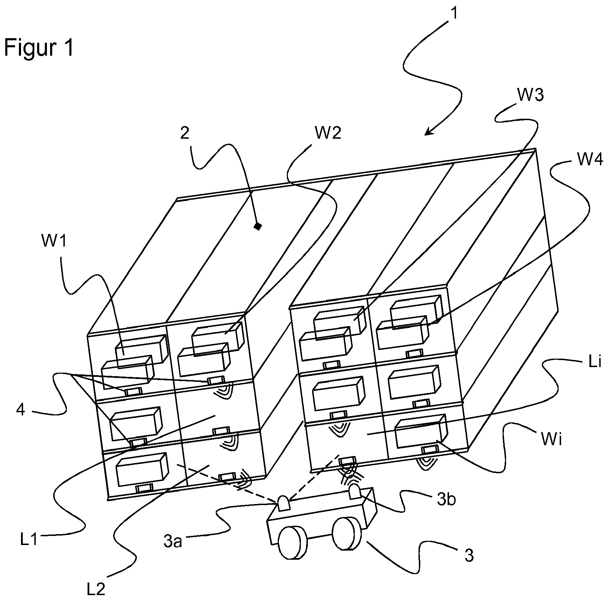

- Fig. 1: eine schematische Perspektiv-Darstellung eines erfindungsgemäßen Automatisierungssystems.

In Figur 1 ist eine schematische Perspektiv-Darstellung eines erfindungsgemäßen Automatisierungssystems 1 für ein Warenlager mit zumindest einem Warenregal 2 dargestellt, das eine mobile Plattform 3 umfasst. Die mobile Plattform 3 ist vorgesehen, um durch das Warenlager zu bewegen und eine ursprünglich vorgesehene Aufgabe zu erledigen. In dem Warenregal 2 sind Waren W1..Wi gelagert, die beispielsweise in einem Laden angeboten und von Kunden aus dem Warenregal 2 entnommen werden. Die Waren W1..Wi können auch in einem Logistiklager zwischengelagert sein.

An den Warenregalen 2 bzw. Verkaufsregalen sind Informationstafeln 4 vorgesehen, die Information bzgl. eines Inhaltes des Warenregals 2 wiedergeben.

Die mobile Plattform 3 umfasst mindestens eine Tiefenkamera 3a, die eine Warenlücke im Warenregal 2 detektiert. Ferner umfasst die mobile Plattform 3 mindestens einen Sensor 3b, der die Information der entsprechenden an der Warenlücke positionierten Informationstafel erfasst.

Mit anderen Worten, die mobile Plattform 3 bewegt sich, vorzugsweise manuell oder autonom, durch das Warenlager, um beispielsweise das Warenregal 2 zu putzen, wenn die mobile Plattform 3 insbesondere einen Reinigungsroboter umfasst, oder das Warenregal 2 zu bepacken, wenn die mobile Plattform 3 insbesondere einen Palettierungsroboter und/oder einen Logistikroboter umfasst. Dabei detektiert die mobile Plattform 3 mittels der Tiefenkamera 3a die Warenlücken L1..Li im Warenregal 2 und erfasst die mobile Plattform 3 mittels des Sensors 3b die Information der entsprechenden an der Warenlücke L1..Li positionierten Informationstafel 4.

Das Automatisierungssystem 1 weist ein übergeordnetes, nicht dargestelltes Steuerungssystem auf, das Daten der Tiefenkamera 3a und des Sensors 3b auswertet und eine Auffüllung der Warenlücke L1..Li veranlasst. Dadurch ist das Automatisierungssystem 1 in der Lage, die Warenlücken im Warenregal 2 zuverlässig zu detektieren und die Auffüllung der richtigen fehlenden Waren W1..Wi zu veranlassen, so dass eine kostengünstige und zuverlässige Automatisierung des Warenregals 2 erzielbar ist.

Die Tiefenkamera 3a umfasst vorteilhafterweise eine 3D-Kamera oder einen 3D-Scanner, die an der mobilen Plattform 3 montiert ist. Hierbei kann die Tiefenkamera 3a zu einem autonomen Navigationssystem der mobilen Plattform 3 gehören, so dass die Tiefenkamera 3a nicht nur die Umgebung der mobilen Plattform 3 für ihre autonome Bewegung erfasst, sondern gleichzeitig die Warenlücken L1..Li im Warenregal 2 mit detektiert.

Die am Warenregal 2 angeordneten Informationstafeln 4 umfassen vorzugsweise elektronische Preisschilde, die Art und Preis der Ware W1..Wi wiedergeben. Hierbei kann das elektronische Preisschild 4 einen RFID-Transponder aufweisen, so dass der Sensor 3b der mobilen Plattform 3 als RFID-Lesegerät ausgebildet ist und die Daten des Preisschildes 4 der entsprechenden Warenlücke L1..Li im Warenregal 2 per Funk erfasst. Die Art und der Preis der Ware W1..Wi können auch mittels Barcodes oder mittels Bluetooth-Funksignal vom elektronischen Preisschild 4 zur Verfügung gestellt sein, so dass der Sensor 3b der mobilen Plattform 3 dementsprechend als Barcode-Lesegerät oder Bluetooth-Lesegerät ausgebildet ist.

### Bezugszeichenliste

- 1: Automatisierungssystem
- 2: Warenregal
- 3: Mobile Plattform
- 3a: Tiefenkamera
- 3b: Sensor
- 4: Informationstafel

- L1..Li: Warenlücke
- W1..Wi: Waren

## Patentansprüche

1. Automatisierungssystem (1) für ein Warenlager mit zumindest einem Warenregal (2), umfassend
eine mobile Plattform (3), die sich durch das Warenlager bewegt, Informationstafeln (4), die Information bzgl. einer Ware (W1..Wi) des Warenlagers wiedergeben und an dem Warenregal (2) angebracht sind,
wobei die mobile Plattform (3) mindestens eine Tiefenkamera (3a), die eine Warenlücke (L1..Li) im Warenregal (2) detektiert, und mindestens einen Sensor (3b), der die Information der entsprechenden an der Warenlücke (L1..Li) positionierten Informationstafel (4) erfasst, umfasst, und
wobei ein übergeordnetes Steuerungssystem vorgesehen ist, das Daten der Tiefenkamera (3a) und des Sensors (3b) auswertet und eine Auffüllung der Warenlücke (L1..Li) veranlasst.

2. Automatisierungssystem (1) nach Anspruch 1, wobei die mobile Plattform (3) einen Reinigungsroboter, einen Palettierungsroboter und/oder einen Logistikroboter umfasst, der manuell bewegbar oder autonom beweglich ist.

3. Automatisierungssystem (1) nach Anspruch 1 oder 2, wobei die Informationstafel (4) ein elektronisches Preisschild umfasst, das Art und Preis der Ware (W1..Wi) wiedergibt.

4. Automatisierungssystem (1) nach einem der vorhergehenden Ansprüche 1 bis 3, wobei die Tiefenkamera (3a) eine 3D-Kamera oder einen 3D-Scanner umfasst.

5. Automatisierungssystem (1) nach einem der vorhergehenden Ansprüche 1 bis 4, wobei der Sensor (3b) ein RFID-Lesegerät, ein Barcode-Lesegerät oder ein Bluetooth-Lesegerät umfasst.
